# EUROPÄISCHE PATENTSCHRIFT

(11) **EP 2 536 577 B1**
(45) Veröffentlichungstag und Bekanntmachung des Hinweises auf die Patenterteilung: **25.03.2015**
(21) Anmeldenummer: 11748298.4
(22) Anmeldetag: 11.07.2011
(51) Int. Cl.: B60C 23/06, B60C 23/08, G01L 17/00, G01B 11/00

(54) **VORRICHTUNG UND VERFAHREN ZUR REIFENDRUCKMESSUNG AUS DEM REIFENABDRUCK**
SYSTEM AND METHOD FOR MEASURING TIRE PRESSURE BASED ON THE FOOTPRINT
SYSTEME ET METHODE DE MESURE DE LA PRESSION D'UN PNEUMATIQUE DE PAR L'EMPREINTE DE CELUI-CI

(30) Priorität: 09.07.2010 DE 102010026730
(43) Veröffentlichungstag der Anmeldung: 26.12.2012
(73) Patentinhaber: MAHA Maschinenbau Haldenwang GmbH & Co. KG, 87490 Haldenwang (DE)
(72) Erfinder: SCHÄFER, Frank, 79808 Weilheim (DE)
(74) Vertreter: Behrmann, Niels
(86) Internationale Anmeldenummer: PCT/EP2011/061761
(87) Internationale Veröffentlichungsnummer: WO 2012/004413

(56) Entgegenhaltungen:
- EP-A1- 0 656 269
- WO-A1-02/42096
- DE-A1-102004 055 701
- US-A1- 2004 216 520

## Beschreibung

Die vorliegende Erfindung betrifft eine Vorrichtung zur Reifendruckmessung nach dem Oberbegriff des Hauptanspruchs. Ferner betrifft die vorliegende Erfindung ein Verfahren zur Reifendruckmessung, insbesondere Verfahren zum Betreiben der Vorrichtung, sowie die Verwendung einer solchen Vorrichtung.

Aus dem Stand der Technik ist es bekannt, den Reifendruck von Fahrzeugen bei stehendem Fahrzeug zu messen. Dies geschieht typischerweise dadurch, dass eine Bedienperson eine (geeignet geeichte) Luftdruckmessvorrichtung an das Reifenventil des entsprechend zu prüfenden Reifens anschließt, einer Manometerskala den Reifendruck entnimmt und dann ggf. durch zusätzliche Funktionalität des typischerweise portablen Geräts Luftdruckkorrekturen in beschränktem Umfange vornehmen kann. Allerdings ist eine derartige Vorgehensweise aufwändig, bedingt ein stehendes Fahrzeug und ist insbesondere im Zusammenhang mit dem Messen einer Vielzahl von Reifen und/oder mehrerer Fahrzeuge, wie dies etwa im Zusammenhang mit regelmäßigen Überprüfungen von LKW-Fahrzeugflotten (sogenannter Fleet-Checks) der Fall ist, impraktikabel. Dies führt dann in der Konsequenz dazu, dass lediglich in vergleichsweise langen Intervallen eine Reifendruckmessung erfolgt, was wiederum dazu führt, dass eine vergleichsweise große Anzahl von Fahrzeugreifen mit falschem Luftdruck, typischerweise Unterdruck, fährt. Die individuell und gesamtwirtschaftlich nachteiligen Konsequenzen sind erhöhter Treibstoffverbrauch, erhöhter Reifenverschleiß bzw. nachteilige Einflüsse auf das Fahrverhalten.

Daher sind bereits punktuelle Versuche unternommen worden, eine Reifendruckmessung bei sich bewegendem Fahrzeug vorzunehmen. Dies bedingt typischerweise, dass keine Manometer- bzw. Schlauchverbindung mit dem Reifenventil gebildet werden kann. Vielmehr sind Reifendrucksensoren zur permanenten Überwachung des Reifendrucks im Felgeninneren, typischerweise auch dort befestigt mit einem Reifenventil, vorgesehen und weisen drahtlose, typischerweise auch dort befestigt mit einem Reifenventil, vorgesehen und weisen drahtlose, typischerweise hochfrequenzmäßig realisierte Mittel zur Reifendruck-Datenübertragung nach extern auf. Diese Vorgehensweise ist jedoch aufwändig, potentiell fehleranfällig und führt gerade bei häufigem Reifenwechsel zu der Gefahr von Beschädigungen der - teueren - Elektronik, so dass gerade im Nutzfahrzeug- bzw. LKW-Umfeld derartige Reifendrucksensoren im Reifen sich nicht durchgesetzt haben.

Aus der EP 0 656 269 A1 ist eine Vorrichtung zur Reifendruckmessung nach dem Oberbegriff des Hauptanspruchs bekannt. Eine derartige Vorrichtung benutzt piezoelektrisch wirksame Sensoren als Messmittel, wobei aus in einer Matrixanordnung angeordneten Sensoren dann gewonnene Muster als Grundlage für die Reifendruckmessung verwendet werden.

Aufgabe der vorliegenden Erfindung ist es daher, eine Vorrichtung zur Reifendruckmessung eines an einem in Bewegung befindlichen Fahrzeug vorgesehenen Reifens zu schaffen, welche, ohne die Nachteile der Reifendruckmessung im Stillstand, gleichwohl geringen technischen und Montageaufwand, hohe Zuverlässigkeit, Belastbarkeit und Sicherheit gegen Zerstörung sowie gute Messgenauigkeit aufweist, damit insbesondere für die Reifendruckmessung in einem kommerziellen Fahrzeugflottenkontext, wie es etwa der LKW-Bereich ist, geeignet ist.

Die Aufgabe wird durch die Vorrichtung mit den Merkmalen des Hauptanspruchs, das Verfahren nach dem fakultativ rückbezogenen Anspruch 13 sowie die Verwendung nach dem unabhängigen Patentanspruch 14 gelöst; vorteilhafte Weiterbildungen der Erfindung sind in den Unteransprüchen beschrieben, wobei im Hinblick auf das erfindungsgemäße Verfahren zusätzlich auch die Verfahrensaspekte betreffenden Merkmale der Unteransprüche als die Vorrichtung weiterbildend zur Erfindung gehörig offenbart gelten sollen.

In erfindungsgemäß vorteilhafter Weise sind zunächst am oder in einem Boden optische Aufnahmemittel als Funktionskomponenten der Messmittel so vorgesehen, dass diese, typischerweise mittels Bildaufnahme, eine Reifenbreite des Reifens feststellen und daraus auf die sogenannte Latschbreite schließen können. Als "Latsch" des Fahrzeugs (englisch: "footprint") wird dabei diejenige i.w. plane Reifen-Profilfläche verstanden, welche zu einem jeweiligen Zeitpunkt auf dem Boden sitzt und durch ihre Latschbreite (angenähert durch die in diesem Bereich zu messende Reifenbreite) sowie ihre Latschlänge (gemessen in Fahrtrichtung der Bewegung bzw. des Überfahrens) bestimmt ist.

Während gemäß der vorliegenden Erfindung die optischen Aufnahmemittel, in ansonsten bekannter Weise durch Auswertung eines entsprechenden digitalen Bildes, ermittelbar sind, sieht die vorliegende Erfindung zwei Wege vor, wie die Latschlänge bestimmt werden kann: Zum einen aus einem Verlauf eines Kraft- bzw. Druckmesssignals, welches dem Überfahren durch das Fahrzeug bzw. den Reifen entspricht, wobei aus diesem Kraftsignalverlauf dann auf die Latschlänge geschlossen werden kann, indem insbesondere Flankenverhalten und Dauer des Kraftsignals ausgewertet werden, ergänzend oder alternativ eine Auswertung der folgenden optischen Auswertemitteln erzeugten Abfolge einer Mehrzahl von profilseitigen Aufnahmen (mit einer jeweiligen Reifenbreite), aus deren Zeitverhalten sich dann alternativ auch auf die Latschlänge schließen lässt. Im Rahmen der Erfindung ist es dann durch die Auswertemittel ermöglicht, die Latschfläche (durch Multiplikation von Latschlänge und Latschbreite) zu ermitteln und durch Berücksichtigung einer Korrekturfunktion den gewünschten Reifendruck-Signalwert zu erhalten. Diese Korrekturfunktion berücksichtigt die Latschbreite, ein mögliches Verhältnis von Rillen zu Lauffläche (was sich wiederum aus dem o.a. digitalen Bild der optischen Aufnahmemittel erkennen lässt), eine etwaige, von einem Rechteck abweichende Form des Latsches od.dgl. Diese Korrekturfunktion lässt sich entweder tabellarisch ermitteln und fassen, alternativ in Form eines funktionalen Zusammenhangs, und in der einfachsten Weise als vereinfachende Konstante, wobei etwa geeignete Vergleichs- und Eichmessungen für die Ausgestaltung dieser Korrekturfunktion die notwendigen Hinweise geben.

Diese erfindungsgemäße Vorgehensweise ermöglicht damit das Realisieren von Reifendruck-Messstationen, welche, in der Art von fließendem Verkehr, das kontinuierliche Messen des Reifendrucks nahezu beliebiger Fahrzeuge während deren kontinuierlicher Bewegung gestattet, wobei eine Verwendung im Nutzfahrzeug- bzw. LKW-Umfeld zwar bevorzugt ist, jedoch nicht beschränkend verstanden werden kann.

Als besonders bevorzugte Weiterbildung der Erfindung hat es sich dabei als nützlich herausgestellt, den Messmitteln berührungslos mit den Reifen zusammenwirkende Temperatursensormittel zuzuordnen bzw. in diese zu integrieren, da die durch die vorliegende Erfindung ermöglichte Messung während der Bewegung und damit praktisch im fließenden Verkehr gerade im kommerziellen Fahrzeugumfeld dazu führt, dass nicht nur kalte Reifen der erfindungsgemäßen Reifendruckmessung unterzogen werden, sondern auch betriebswarme Reifen (wobei eine Reifenbetriebstemperatur durchaus 80°C und mehr erreichen kann). Im Rahmen der Erfindung hat sich herausgestellt, dass die Reifentemperatur einen signifikanten Einfluss auf eine wie in der vorliegenden Erfindung externe, Latsch-basierte Reifendruckmessung besitzt, so dass zum Erreichen zuverlässiger Messwerte eine Temperaturkompensation bevorzugt ist. Hinzu kommt der Umstand, dass Norm- bzw. Vorgabewerte für einen Reifendruck typischerweise im Bereich von 20°C liegen, so dass zur Vereinheitlichung des Messverhaltens auch eine Temperaturkompensation der Reifendruckmessung sinnvoll ist.

Im erfindungsgemäßen Grundgedanken der Messung im fließenden Verkehr ist es dabei vorgesehen, auch die Temperaturmessung im Hinblick auf den Reifen berührungslos auszugestalten, wobei sich hier weiter bevorzugt strahlungsbasierte Temperatursensoren, insbesondere Infrarot-Temperatursensoren, als günstig herausgestellt haben, die weiter bevorzugt auf eine (z.B. innere) Reifenflanke des zu messenden Reifens gerichtet sein können.

Wird im Rahmen bevorzugter Realisierungsformen der Erfindung zur Messung der Latschlänge eine Kraftsensorvorrichtung für die Messmittel eingesetzt, ist es im Rahmen bevorzugter Weiterbildungen der Erfindung bevorzugt, eine Mehrzahl von mechanisch miteinander gekoppelten, zum Überfahren durch das Fahrzeug ausgebildeten Kraftsensoren vorzusehen, welche weiter bevorzugt etwa mittels einer gemeinsamen Druckplatte zur Kopplung verbunden ist, welche dann von dem Reifen überfahren wird.

Im Rahmen praktischer Realisierungsformen der Erfindung liegt es dabei, jeweilige Bild- bzw. Kraftsensorsignale für einen jeweils zu messenden Reifen mehrfach zu erzeugen, so dass die erfindungsgemäßen Auswertemittel Signalabfolgen zur Auswertung benutzen können.

Dabei ist, im Hinblick auf die weiterbildungsgemäße Kraftsensorvorrichtung, eine Signal-Wiederholfrequenz im Bereich von zwischen ca. 10 und 1000 Hz bevorzugt, im Hinblick auf die optischen Bildaufnahmemittel ist eine Anzahl von mindestens drei, bevorzugt mindestens fünf aufeinanderfolgenden Einzelbildern für die nachfolgende Auswertung bevorzugt (bei Bildwiederholfrequenzen bis zu 1 kHz und mehr).

Im Rahmen bevorzugter Weiterbildungen der Erfindung sind den Auswertemitteln optische Anzeigemittel zugeordnet, welche ein Ergebnis der Reifendruckmessung (ggf. zusätzlich ein Ergebnis weiterer Reifenparameter-Messungen, wie etwa einer Profiltiefe-Messung) geeignet visualisiert ausgeben. Dabei bietet es sich etwa an, in der Art einer Ampel oder dergleichen digitaler bzw. symbolischer Visualisierung einem Nutzer (etwa einem Fahrer unmittelbar in das Cockpit) ein entsprechend aufbereitetes Schwellwert-Signal zu senden, welches dem Fahrer, für den Fall einer normgerechten Reifendruckmessung, einfach ein störungsfreies Weiterfahren signalisiert und den Fahrer lediglich für den Fall einer Abnormalität (etwa Absinken des Reifendrucks unter einen kritischen vorgegebenen Schwellwert) zum Anhalten und Auffüllen bzw. zur Reparatur auffordert.

Im Rahmen bevorzugter Realisierungsformen der vorliegenden Erfindung liegt es zudem, die Reifendruckmessung mit weiteren Reifenparameter-Messungen zu kombinieren. Dabei ist es weiterbildungsgemäß vorteilhaft und synergistisch, die bereits benutzten optischen Aufnahmemittel zusätzlich zu benutzen, um etwa damit eine Reifenprofiltiefe-Messung, weiter bevorzugt mittels desselben Bewegungs- bzw. Überfahrvorgangs durch das Fahrzeug, vorzunehmen. So wären etwa in der in der EP 1 952 092 B1 der Anmelderin beschriebenen Weise konfigurierte optische Aufnahmemittel dann einerseits geeignet, mittels der Projektion von optischen Liniensignalen auf das Reifenprofil und nachfolgender triangulierender Bildauswertung einerseits aus dem Bildsignal eine Reifenprofiltiefe-Information zu gewinnen, welche dann wiederum weiterbildungsgemäß, etwa anhand eines Schwellwerts gefiltert, angezeigt werden kann. Gleichzeitig gibt dieses Bild in der in der EP 1 952 092 B1 beschriebenen Weise eine effektive Reifenbreite an, welche gemäß der vorliegenden Erfindung als Latschbreite bei der Reifendruckmessung zu berücksichtigen ist und insoweit für eine günstige technische Synergie bei der gemeinsamen Ermittlung beider Reifenparameter - Reifendruck und Reifenprofiltiefe - dienen.

Im Ergebnis ermöglicht es die vorliegende Erfindung, in überraschend einfacher Weise eine zuverlässige, wartungs- und störungsarme sowie flexibel skalierbare Infrastruktur für die Reifendruckmessung zu schaffen, welche zwar nicht auf einen Flotten- bzw. LKW-Bereich beschränkt ist, hier jedoch besonders sichtbar die Vorteile kurzer Durchlaufzeiten, einer Vermeidung praktisch jedes unproduktiven Stillstands und beliebiger nachschaltbarer Verwert- und Auswertbarkeit von Reifendruckdaten schafft.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: ein schematisches Blockschaltbild mit wesentlichen Funktionselementen der Vorrichtung zur Reifendruckmessung gemäß einer ersten bevorzugten Ausführungsform der vorliegenden Erfindung;
- Fig. 2:: eine schematische Darstellung der Verankerung einer solchen Vorrichtung in einem Boden relativ zu einer Fahrtrichtung des Überfahrens durch Fahrzeuge;
- Fig. 3:: eine Illustration eines Drucksignalverlaufs über der Zeit zur Auswertung für eine Ermittlung der Latschlänge;
- Fig. 4:: eine Illustration eines exemplarischen, durch die optischen Bildaufnahmemittel profilseitig aufgenommenen Bildes zur Ermittlung einer Profil- sowie Latschbreite und
- Fig. 5:: ein Druck-/Temperaturdiagramm zum Verdeutlichen des Zusammenhanges zwischen einem Reifendruck und einer Reifentemperatur bei verschiedenen Befüllungstemperaturen.

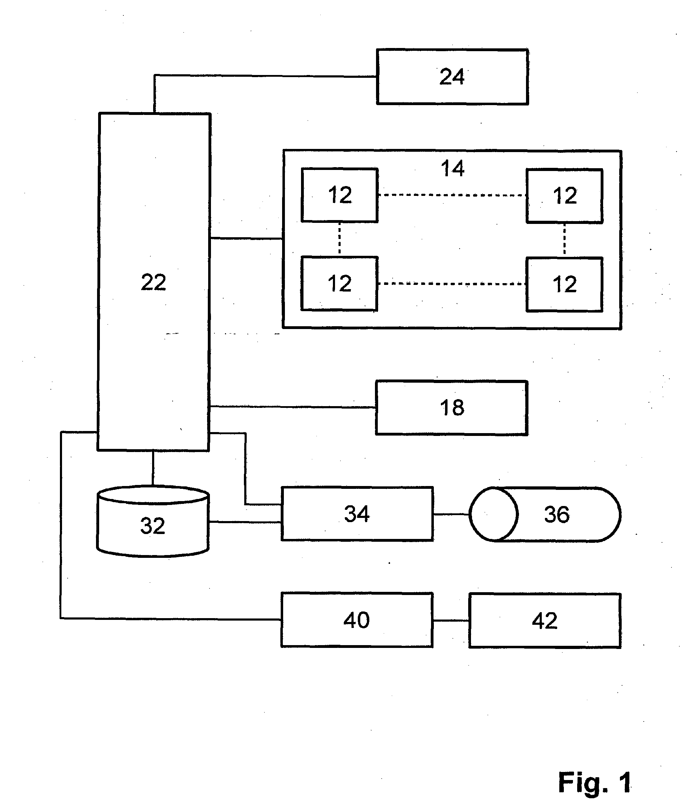

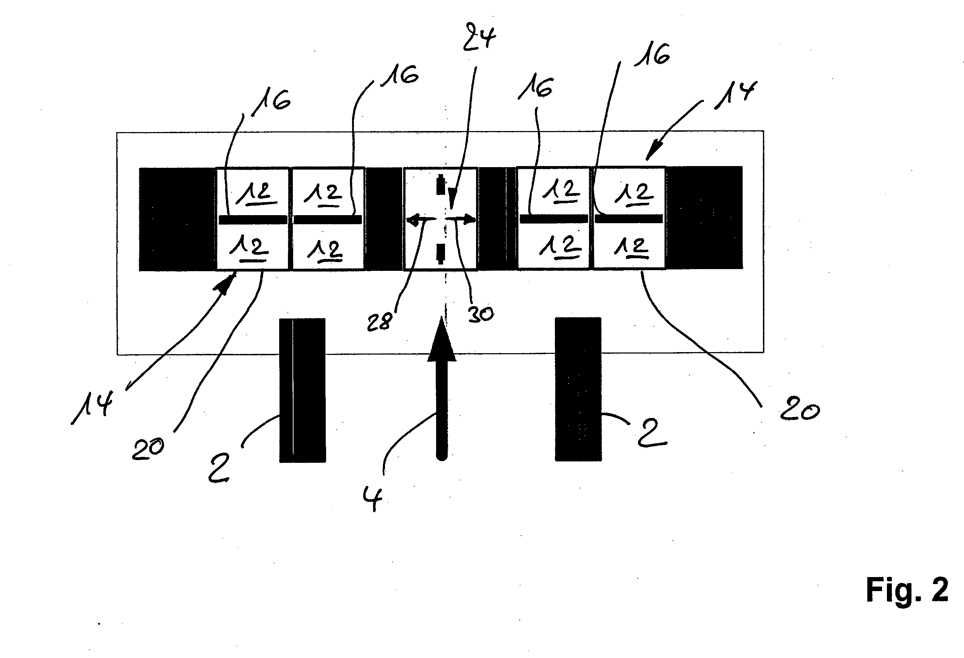

Die Fig. 1 zeigt in der schematischen Ansicht die wesentlichen Funktionskomponenten einer Vorrichtung zur Reifendruckmessung eines an einem in Bewegung befindlichen Fahrzeug vorgesehenen Reifens gemäß einer ersten bevorzugten Ausführungsform. Eine derartige Installation, exemplarisch etwa in Fig. 2 gezeigt, sieht, eingelassen in einen unterliegenden Boden zum Ausbilden eines Überfahr-Pfades für ein zu messendes Fahrzeug (hier: einen Lkw), ein Paar von einem jeweiligen Reifen 2 einer (gemeinsamen) Achse zugeordneten Messmitteln 10 vor, welche jeweils eine vier Kraftsensoren 12 aufweisende Kraftsensoreinheit 14 sowie, in der in Fig. 2 gezeigten Weise zwischen einem jeweiligen axialen Paar von Kraftsensoren angeordnet, einen Messschlitz 16 für eine optische Erfassungseinheit 18 aufweisen. In der in Fig. 1 gezeigten Weise sind dabei die vier Kraftsensoren 12 der Kraftsensoreinheit 14 mechanisch gekoppelt und damit druckseitig verbunden durch eine Druckplatte 20, wie sie in Fig. 2 gezeigt ist und in der Fig. 1 schematisch durch die Umrandung der Anordnung der vier Kraftsensoren 12 angedeutet ist.

Unterhalb des Messschlitzes 16, eingelassen in den Boden, ist als optische Erfassungseinheit 18 zunächst eine auf das Reifenprofil eines die Anordnung (in einer Fahrtrichtung 4 senkrecht zur Zeichnungsrichtung der Fig. 2) überfahrenden Reifens vorgesehen, wobei diese Kameraanordnung, in einem Winkel gerichtet auf das Profil, zunächst ein elektronisch erfassbares Bildsignal erzeugt, welches von einer zugeordneten zentralen Verarbeitungseinheit 22, typischerweise realisiert als gängige und geeignet programmierte PC-Einheit, dann zum Bestimmen der Latschbreite ausgewertet wird.

Als "Latsch" im Sinne des vorliegenden Ausführungsbeispiels gilt dabei diejenige plane Auflagefläche des Reifens, welche bestimmt wird von der Latschbreite (sich erstreckend quer zur Fahrtrichtung und gemessen von der optischen Erfassungseinheit 18) sowie der Latschlänge, sich erstreckend i.w. entlang der Fahrtrichtung und im vorliegenden Ausführungsbeispiel gemessen von der Kraftsensoreinheit 14 bzw. einem von der zentralen Verarbeitungseinheit 22 ausgewerteten kontinuierlichen Signal der Kraftsensoreinheit 14 beim Überfahren der Kraftsensoreinheit 14 mit dem betreffenden Reifen.

Ergänzend und vorteilhaft im Rahmen der vorliegenden Erfindung ist den aus der Kraftsensoreinheit 14 und der optischen Erfassungseinheit 18 realisierten Messmitteln noch eine Temperaturerfassungseinheit 24 zugeordnet, welche, realisiert als infrarot-empfindliche und berührungslose Thermo-Sensorik, auf einem langgestreckten Dom 26 zwischen den in der Fig. 2 gezeigten beiden Kraftsensoreinheiten 14 vorgesehen ist und Thermosensoren so ausgerichtet aufweist, dass diese entlang der Pfeilrichtungen 28 bzw. 30 jeweils auf eine Innenflanke eines über die Kraftsensor-Druckplatten 20 rollenden Fahrzeugreifen gerichtet ist.

Die in Fig. 2 in der konkreten Realisierung schematisierte Einheit ist damit geeignet, den Luftdruck von Fahrzeugen achsenweise zu erfassen, d.h. gleichzeitig bzw. gemeinsam für jeweilige, endseitig an einer Fahrzeugachse sitzenden Reifen.

Damit weist eine typische Realisierungsform einer solchen Anordnung eine Breite von ca. 250 bis 300 cm auf, wobei eine Breite (d.h. jeweils gemessen senkrecht zur Fahrtrichtung) einer Druckplatte 20 ca. 50 bis 75 cm betrifft und eine Erstreckung einer Druckplatte 20 entlang der Fahrtrichtung typischerweise 75 cm beträgt.

Die Fig. 1 verdeutlicht weitere Funktionskomponenten, welche zum Erreichen eines betriebsfähigen Systems der Vorrichtung gemäß Fig. 2 zugeordnet sind. So ist zunächst der zentralen Verarbeitungseinheit 22, welche die Ausgangsignale der optischen Erfassungseinheit 18 (zur Erfassung und Bestimmung der Latschbreite), der Kraftsensoreinheit 14 (zur Erfassung bzw. Bestimmung der Latschlänge) sowie der Temperatur-Erfassungseinheit 24 (zum Erfassen eines kompensierenden Temperatursignals eines zu messenden Reifens) erhält und aus diesen Daten dann in nachfolgend zu beschreibender Weise ein Reifendrucksignal erzeugt, zusätzlich verbunden mit einer Datenbankeinheit 32, welche zum Ablegen der von der zentralen Verarbeitungseinheit erzeugten Reifendruckdaten ausgebildet ist und weiterbevorzugt verbunden ist mit einer Identifikationseinheit 34, welche, geeignet als zusätzlicher möglicher Index für einen jeweiligen Reifendruck-Datensatz, ein ein jeweiliges Fahrzeug identifizierendes Kennzeichen (typischerweise mittels einer Kamera 36 erzeugtes amtliches Kennzeichen) zur Verfügung stellt. Dieses Signal kann dann auch in weiterbildenden Realisierungsformen der Erfindung geeignet sein, um einen Zugriff auf die Datenbank zu autorisieren, nachfolgend zu beschreibende Ausgabevorgänge zu ermöglichen oder andere Operationen und Auswertungen zuzulassen.

Im Rahmen der vorliegenden Realisierungsform der Erfindung kann dabei die Kameraeinheit 36 als einzelne Bildaufnahmeeinheit auf einen entsprechenden Nummernschildbereich eines Fahrzeugs an oder auf der Anordnung der Fig. 2 gerichtet sein, alternativ aus einem Kamerapaar bestehen, welches typischerweise nützlich bei Gespannen mit abweichenden Kennzeichnungen für Zugmaschine und Aufleger zwei Kameras vor- und rückseitig auf jeweilige amtliche Kennzeichnungen richten. Die Identifikationseinheit 34 ersetzt dann in ansonsten bekannter Weise ein entsprechendes Kennzeichen-Bildsignal in Kennzeichendaten um, welche z.B. günstig sind, um damit die in der Datenbank 32 abzulegenden Reifendruckdaten zu indizieren.

Zusätzlich weist die Realisierungsform der Erfindung gemäß Fig. 1 eine Ausgabeeinheit 40 auf, welche mit einer im vorliegenden Ausführungsbeispiel als Ampel (Symbol- bzw. Schwellwerteinheit) verbunden ist. Konkret erzeugt die Anzeigeeinheit aus Reifendruck-Messsignalen der zentralen Verarbeitungseinheit ein unmittelbar etwa einem Fahrzeugführer anzuzeigendes Signal, wobei dies, im dargestellten Ausführungsbeispiel, etwa als rot-/grünes Signal der Anzeigeinheit 42 realisiert ist und dem Fahrer anzeigt, ob ein ausreichender, oder aber mangelhafter Reifendruck vorliegt, mit dem Ergebnis, dass ein unmittelbarer Hinweis an den Fahrzeuglenker gegeben wird, etwa nunmehr eine Reifendruck-Füllstation anzufahren oder Maßnahmen vorzunehmen.

Der Betrieb der in den Fig. 1 bzw. 2 gezeigten Vorrichtung ist wie folgt. Der Fahrzeuglenker lenkt das Fahrzeug, z.B. einen Lkw, mit Schritttempo über die in Fig. 2 gezeigte Anordnung. Eine konkrete Überfahrdauer einer jeweiligen Druckplatte 20 durch einen jeweiligen dort überlaufenden Reifen beträgt daher ca. 0,4 bis 1,2 s.

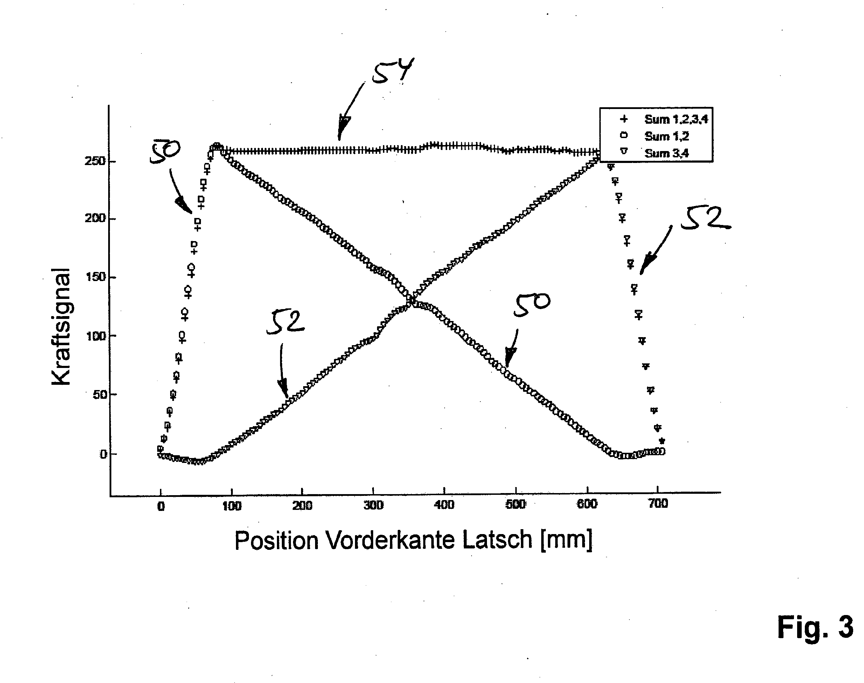

Während des Überfahrens nimmt die Kraftsensoreinheit 14 mittels der mechanisch durch die Platte 20 gekoppelten Einzelsensoren 12 kontinuierlich das Drucksignal auf; eine typische Messfrequenz liegt bei ca. 200 Hz, so dass in der in Fig. 3 gezeigten Weise zunächst ein erster Kurvenverlauf 50 eines ersten Paares von Kraftsensoren 12 (in Achsrichtung des Fahrzeugs) einen steilen Anstieg erfährt und daraufhin dann kontinuierlich abfällt, während ein zweiter Kurvenverlauf 52, insoweit entsprechend dem zweiten Paar der der Kraftsensoreinheiten 12, wiederum axial zueinander und in Fahrtrichtung nachgelagert, zuerst einen flachen Druckanstieg, mit einem nach Erreichen des Maximalwerts steileren Abfall zeigt. Zusätzlich führt die Fig. 3 ein Summensignal beider Einzelsignale 54 auf, welches die jeweiligen Rampen, eine in etwa konstante Messzeit zwischen beiden Maxima als kritische Parameter für die weitere Auswertung aufweist.

Zusätzlich führt die Fig. 3 ein Summensignal beider Einzelsignale 54 auf, welches die jeweiligen Rampen und einen in etwa konstanten Signalpegel zwischen beiden Maxima (sowie dessen Dauer) als kritische Parameter für die weitere Auswertung aufweist.

Entsprechend geben die jeweiligen Kraft-/Wegverläufe das jeweilige Auf- bzw. Abrollen und das Auftreffen des Reifens bis zu einem Kraftmaximum wieder, mit jeweils unterschiedlichen Flankenverläufen, bezogen auf ein voreilendes bzw. nacheilendes Sensorpaar. Die jeweils steilen Flanken sind dann Grundlage für die erwähnte Bestimmung einer effektiven (wirksamen) Latsch-Länge, wobei eine finale wirksame Latsch-Länge sich dann aus der kürzeren ansteigenden Flanke des ersten, voreilenden Sensorpaares sowie einer abfallenden Flanke des zweiten, nachlaufenden Sensorpaares durch Addition ermittelt. Als "Länge" wird dabei eine erste Dimension der Latsch-Fläche in der Fahrtrichtung verstanden, und als "wirksam" diejenigen Bereiche, bei welchen ein Krafteintrag in die Kraftaufnehmer maximal ist, entsprechend einem linearen bzw. annähernd linearen Anstieg der Signale der Fig. 3 beim Auffahren (bzw. abfallend beim Abfahren). Durch ansonsten bekannte und hier nicht näher zu erläuternde Techniken der Signalauswertung wird der lineare Bereich (entsprechend hier auch erfinderisch der Bereich der in etwa maximalen Steigung) festgestellt. Erfindungsgemäß vorteilhaft hat sich dann herausgestellt, dass dieser dann, wie beschrieben, unmittelbar zur Ermittlung der gewünschten (wirksamen) Latsch-Länge nutzbar ist.

Entsprechend basiert die vorliegende Latsch-Längen-Ermittlung auf einer eindimensionalen Kraftverlaufs-Auswertung über der Zeit (bzw. über dem korrespondierenden Ort, fixiert durch die zugeordnete Länge der Kraftaufnehmerplatte).

Die zentrale Verarbeitungseinheit 22 verrechnet entsprechend die Druck-Messwertverläufe (die Fig. 3 verdeutlicht insoweit entlang der horizontalen Zeitachse einen korrespondierenden Längen-Verlauf über der Druckplatte und zeigt die 200 Hz-Taktung) zu der wirksamen Latschlänge.

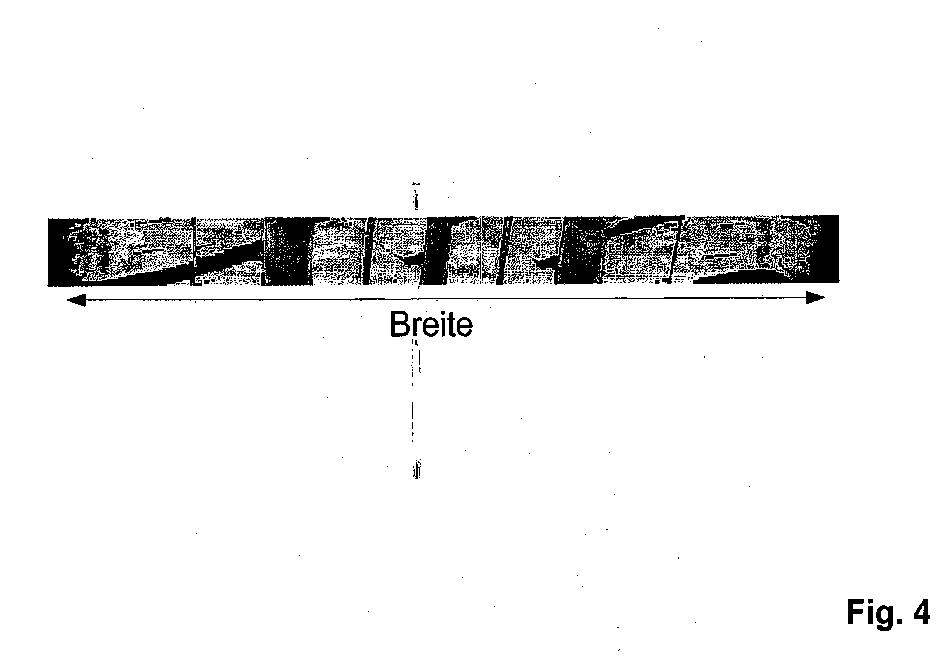

Zusätzlich empfängt die zentrale Verarbeitungseinheit 22 das Profilbreite-Signal der optischen Erfassungseinheit 18 (z.B. einer Kameraeinheit). Ein exemplarisches Bild ist in der Fig. 4 gezeigt und wird benutzt, um damit die Latschbreite anzunähern. Multiplikation von Latschbreite und Latschlänge führt dann zu der Latschfläche, wobei sich der aktuelle (Ist-)Reifendruck des Fahrzeugs dann bestimmt aus [Kraft auf die Kraftsensorreinheit] / Latschfläche x Korrekturfaktor, und wobei der Korrekturfaktor auf der Basis heuristischer bzw. vorbestimmter Daten etwaiger Einflüsse der Reifenflanken-Starrheit und andere Faktoren berücksichtigt. Im Rahmen der vorliegenden Erfindung hat es sich jedoch als vorteilhaft herausgestellt, eine Korrekturfunktion als Korrekturfaktor heranzuziehen, welche geeignet eine Latsch-Breite berücksichtigt, ergänzend gegebenenfalls ein Verhältnis von Rillen- zu Lauffläche (welche sich durch weitere optische Auswertung aus dem Bild der optischen Erfassungsmittel ermitteln lässt und so eine präzisere wirksame Flächenbemessung ermöglicht, da ja Rillen selbst nicht unmittelbar zu der Druckmessung beitragen, sondern lediglich die eigentliche Gummi-Lauffläche). Ferner kann eine von einer idealisierten Rechteckform abweichende Latsch-Form berücksichtigt werden, wobei die vereinfachend als "Korrekturfaktor" herangezogene Korrekturfunktion dann in ansonsten bekannter Weise durch Vergleichsmessungen, Simulationen od.dgl. geeicht und angepasst werden kann.

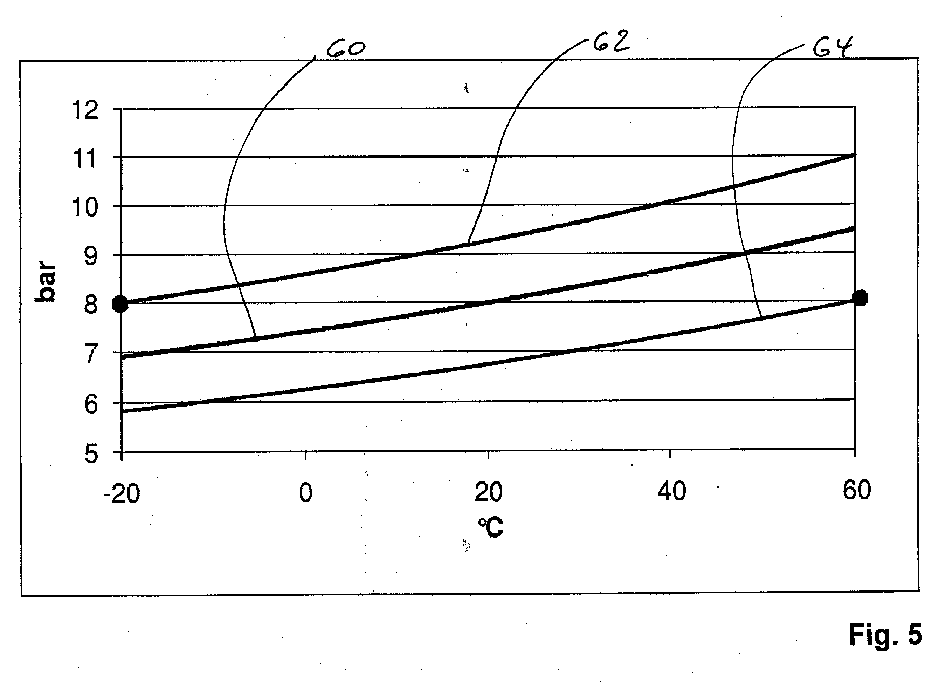

Zusätzlich empfängt die zentrale Verarbeitungseinheit 22 eine aktuelle Reifentemperatur wie sie in der vorbeschriebenen Weise durch die Temperaturerfassungseinheit 24 bzw. die darin vorgesehenen Infrarotsensoren 26 bereitgestellt wird. Dieses Temperatursignal wird benutzt, um den in der vorstehend beschriebenen Weise ermittelten Ist-Druck auf einen Nenn-Fülldruck (z.B. Luftdruck) zu normieren. Diesem liegt zunächst der Umstand zugrunde, dass ein Nenn-Fülldruck, im Sinne einer gesetzlichen bzw. Norm-Vorgabe, stets bei Umgebungstemperaturen, typischer Wert 20°C, vorgegeben ist. Im Rahmen der Erfindung hat sich herausgestellt, dass jedoch betriebswarme Reifen diesen Nenn-Fülldruck teilweise drastisch überschreiten, so dass ein aktuell gemessener Fülldruck, bei von etwa 20°C nach oben oder unten abweichender Reifentemperatur, wiederum signifikant das gewünschte, Norm-Wert-bezogene Reifendruck-Messergebnis verfälscht. Einen derartigen Zusammenhang verdeutlicht die Grafik der Fig. 5, welche im Rahmen der Erfindung die Temperaturabhängigkeit eines Reifendrucks aufzeigt, indem nämlich der Reifendruck über der Temperatur aufgetragen ist und die drei gezeigten Messkurven 60, 62, 64 das Verhalten des Reifendrucks beschreiben, wenn diese zu jeweils verschiedenen Fülltemperaturen (-20°C für Kurve 64, 20°C für Kurve 60 und 60°C für Kurve 62) einen typischen Norm-Reifendruck von 8 bar (für Lkw) erzeugt haben. So zeigt etwa die mittlere Kurve 60, dass ein bei 20°C mit 8 bar gefüllter Reifen bei einer (durchaus nicht untypischen) Betriebstemperatur von 60° einen Druck-Istwert von 9,5 bar aufweist (bzw. aufweisen muss), um noch Normgerecht gefüllt zu sein.

Diese Temperaturkompensation wird im Rahmen der vorliegenden Erfindung durch die zentrale Verarbeitungseinheit vorgenommen, wobei etwa Verrechnungsschemata bzw. Tabellen gemäß Fig. 5 entsprechend funktionale oder datenmäßige Verwendung finden.

Die zentrale Verarbeitungseinheit leitet dann das auf einen Nenn-Fülldruck korrigierte Ist-Druckergebnis zur Speicherung weiter an die Datenbankeinheit 32, wo dieser Reifendruckwert zusammengeführt wird mit einem parallel während des Überfahrens von der Identifikationseinheit 34 (bzw. dem elektronisch erfassten und umgesetzten Kennzeichenbild der Kamera 36) ermittelten amtlichen Kennzeichen eines betreffenden Fahrzeugs als Index für die Datenbank 32.

Als Reaktion auf ein Steuersignal der Ausgabeeinheit 40 gibt dann die Ampel-Anzeigeeinheit 42 ein Grün-Signal (typischerweise sichtbar für einen Fahrer des Fahrzeugs aus dem Führerstand) aus, wenn der kompensierte Reifendruck innerhalb eines vorbestimmten Schwellwertintervalls um den erwarteten Norm-wert liegt.

Die vorliegende Erfindung ist nicht auf das vereinfachte und auf das Grundprinzip realisierte Blockschaltbild der Fig. 1 mit den weiteren Illustrationen beschränkt.

So ist es zunächst hardware-technisch möglich, die konkrete Realisierung (etwa gemäß Fig. 2) alternativ auszugestalten; zunächst wäre es etwa im Zusammenhang mit Lkw-Reifen günstig, die jeweils endseitig in der Fig. 2 gezeigten Druckplatten mit jeweils zugeordneten Kraftsensoreinheiten jeweils paarweise auszugestalten, um insoweit auch Doppelrad-Achsen von Lkw mit einem Überfahr-Vorgang erfassen zu können. Dies bringt zwar geometrisch zusätzliche Komplexität, jedoch lässt sich mit Mitteln der Signalverarbeitung auch eine derartige doppelrädige Anordnung problemlos trennen.

Während in der vorbeschriebenen Weise das Drucksignaleinheit 14 und dessen zeitlicher Verlauf zur Latsch-Längenbestimmung benutzt wurde, ist es alternativ und im Rahmen weiterer Ausgestaltungen der Erfindung möglich, auch die Latsch-Länge mittels der optischen Vorrichtung (z.B. einer von unterhalb durch einen geeigneten Beobachtungsschlitz auf das Profil gerichteten Kameraeinheit) festzustellen. Zu diesem Zweck würde, bei bekannter Geometrie etwa eines solchen Bildfensters, mit welchem die aktuelle Abbildung des überfahrenen Reifenprofils sequentiell erfasst wird, aus der Abfolge der Einzelbilder (bei dem sukzessive das Bildfenster ausfüllendem Profilmuster und wieder freigegebenem Profilmuster beim Auf- und Abfahren) und Kenntnis einer Bildaufnahmefrequenz durch entsprechende geometrische Auswertung eine Latsch-Länge entsprechend des Überrollvorgangs bestimmbar sein, zusätzlich zu der hier ohnehin unmittelbar in Querrichtung aus dem Bild (Beispiel etwa Fig. 4) detektierten Latsch-Breite. Vorteilhaft ergibt es dadurch die Möglichkeit, aus dem Bild bzw. der Bildfolge eine etwaige Latsch-Verformung, z.B. das Ergebnis eines deutlichen Unterdrucks und einer damit verbundenen Reifenverformung, festzustellen.

Auch liegt es im Rahmen bevorzugter Weiterbildungen der Erfindung, die Auswerteeinheit 40 zusätzlich und geeignet für vielfältige Autorisierungs-, Bezahl-, Datenübertragungs- und Koordinationsaufgaben einzurichten: So ist es einerseits bevorzugt, der Ausgabeeinheit eine (in den Figuren nicht gezeigte) Transaktions- und/oder Ausgabeeinheit zuzuordnen, mit welcher etwa ein Fahrzeugführer, zusätzlich zu der Ampelanzeige 42, ein genaues detailliertes Messprotokoll erhalten kann, wenn er hierfür einen Bezahlungsvorgang tätigt, alternativ wenn sein Kfz-Kennzeichen (aus der Datenbank 32) als bekannt bzw. autorisiert erkannt wird und so dann ihm über eine nicht gezeigte Drucker- oder andere Ausgabeeinheit, ergänzend oder alternativ etwa über eine drahtlose Kommunikation (E-Mail, sms, usw.) eine konkrete Dateninformation zugeleitet wird. Auch ist es möglich, die Ausgabeeinheit in geeigneter Weise als Teilnehmerin an einer übergeordneten, vernetzten Systemkonfiguration zu verstehen, bei welcher die Einheit der Fig. 1 in der Art eines Clients angebunden ist an eine z.B. überregionale, gar deutschlandweite Vernetzung von verschiedenen Stationen, die in der gemäß Fig. 2 beschriebenen Weise realisiert sind und das flottengerechte Zusammenführen und Verarbeiten von Reifendruckdaten ermöglichen.

Eine besonders elegante und bevorzugte Variante und Weiterbildung der Erfindung besteht darin, die optische Erfassungseinheit 18 zu benutzen, um mit dieser zusätzlich und neben den in der vorbeschriebenen Weise erzeugten Reifendruckdaten noch Profiltiefedaten zu ermitteln. Für diesen Zwecke wertet die zentrale Verarbeitungseinheit 22 das von der optischen Erfassungseinheit 18 erzeugte Bildsignal in der Art einer Triangulation aus, um nicht nur ein Reifenbreitesignal zu erhalten, sondern um auch aus einem Profilbild (bzw. einer Abfolge von Profilbildern; typischerweise lassen sich während eines Überfahrvorgangs etwa 3 bis 5 aufeinanderfolgende Profilbilder generieren) eine Profiltiefe zu errechnen. Verwiesen wird diesbezüglich auf den Offenbarungsgehalt der EP 1 952 092 B1, welche im Hinblick auf die Vorgehensweise zum Erzeugen eines Profiltiefesignals als zur Erfindung gehörig in die vorliegende Anmeldung einbezogen gelten soll. So ist es insbesondere auch bevorzugt, sei es lediglich zur Bestimmung der Profilbreite, s.o, oder aber zum zusätzlichen Ermitteln der Reifenprofiltiefe, die optische Erfassungseinheit mit Beleuchtungsmitteln in Form von streifenförmigen Lichtquellen, typischerweise realisiert durch in einem vorbestimmten Winkel auf das Profil gestrahlte Laser-Streifen, zu realisieren, welche in der Bildaufnahme eine verbesserte und vereinfachte bzw. höher aufgelöste Möglichkeit der Profiltiefemessung bzw. der Reifenbreitenmessung ermöglichen.

Insoweit wäre dann die generische Realisierung des Ausführungsbeispiels der Fig. 1 zu ergänzen um eine zusätzliche Möglichkeit der geeigneten Ausgabe von Profiltiefedaten, wobei diese dann, entweder kombiniert mit Reifendruckmess-Informationen (und etwa logisch - UND verknüpft) zur Anzeige 42 gelangen, ergänzend und/oder die dem jeweiligen Interessenten, z.B. dem Lkw-Fahrer, zugänglichen Daten informativ vervollständigen.

Im Ergebnis entsteht durch die vorliegende Erfindung in überraschend einfacher und eleganter Weise die Möglichkeit, lediglich durch Überfahren mittels des die zu messenden Reifen tragenden Fahrzeugs zuverlässig, in kürzester Messzeit, mit vergleichsweise geringem Hardware-Aufwand und ohne die Notwendigkeit von Stillstandszeiten relevante Reifendruckdaten zu generieren, diese gegebenenfalls durch Reifenprofildaten zu ergänzen, dabei insbesondere noch synergistisch für beide Zwecke optische Erfassungsmittel zu kombinieren und so dafür zur sorgen, dass Reifendruck als auch verkehrskritische und für die Verkehrssicherheit relevante Größe häufiger und zuverlässiger gemessen werden kann.

## Patentansprüche

1. Vorrichtung zur Reifendruckmessung eines an einem in Bewegung befindlichen Fahrzeug vorgesehenen Reifens, mit
am oder in einem Boden zum Zusammenwirken mit dem Reifen vorgesehenen Messmitteln (14, 18, 24), die als Reaktion auf ein Überfahren mit dem Reifen ein elektronisch auswertbares Messsignal erzeugen
und Auswertemitteln (22, 40), die als Reaktion auf das Messsignal ein dem Reifendruck entsprechendes Reifendrucksignal ausgeben,
wobei
die Messmittel Aufnahmemittel (18) zum Erfassen einer Reifenbreite als Latschbreite eines sich bei dem Überfahren auf dem Boden bildenden Latsches des Reifens aufweisen,
die Auswertemittel zum Bestimmen einer Latschlänga des Latsches aus
einer Abfolge von durch die Aufnahmemittel erzeugten Reifenbreitedaten und/oder aus einem Verlauf eines von den Messmitteln erzeugten Druckmesssignals,
sowie zum Bestimmen des Reifendrucks aus einer durch Latschlänge und Latschbreite ermittelten Latschfläche und einer auf die Latschfläche durch den Reifen wirkenden Kraft
ausgebildet sind,
**dadurch gekennzeichnet, dass** die Aufnahmemittel optische Aufnahmemittel aufweisen.

2. Vorrichtung nach Anspruch 1,
**dadurch gekennzeichnet, dass**
die Messmittel berührungslos auf den Reifen wirkende Temperatursensormittel (24) aufweisen, die zum Erzeugen eines Reifentemperatursignals ausgebildet sind,
und die Auswertemittel zum Verarbeiten des Reifentemperatursignals beim Erzeugen des von der Reifentemperatur abhängigen Reifendrucksignals ausgebildet sind.

3. Vorrichtung nach Anspruch 2,
**dadurch gekennzeichnet, dass**
die Temperatursensormittel (24) einen auf eine Reifenflanke des Reifens gerichteten, infrarotbasierten Temperatursensor aufweisen.

4. Vorrichtung nach einem der Ansprüche 1 bis 3,
**dadurch gekennzeichnet, dass**
die Messmittel eine Kraftsensorvorrichtung (14) aufweisen, die eine Mehrzahl von mechanisch miteinander gekoppelter, zum Überfahren durch das Fahrzeug ausgebildeter Kraftsensoren (12) aufweist.

5. Vorrichtung nach Anspruch 4,
**dadurch gekennzeichnet, dass**
die Mehrzahl der in einer Richtung quer und/oder parallel zur Richtung des Überfahrens angeordneten Kraftsensoren mittels einer gemeinsamen, zum Kontaktieren mit dem Reifen eingerichteten Druckplatte verbunden ist.

6. Vorrichtung nach einem der Ansprüche 1 bis 5,
**dadurch gekennzeichnet, dass**
die Kraftsensorvorrichtung zum Erzeugen einer Abfolge des Druckmesssignals mit einer Frequenz im Bereich zwischen 10 und 500 Hz ausgebildet ist.

7. Vorrichtung nach einem der Ansprüche 1 bis 6,
**dadurch gekennzeichnet, dass**
die optischen Aufnahmemittel eine Bildaufnahmeeinheit aufweisen, die auf das Reifenprofil gerichtet ist und zum Erzeugen mindestens eines eine Reifenbreite-Information aufweisenden elektronisch auswertbaren Bildes für den Reifen ausgebildet ist.

8. Vorrichtung nach Anspruch 7,
**dadurch gekennzeichnet, dass**
die optischen Aufnahmemittel zum Erzeugen mindestens eines auf das Reifenprofil gerichteten, linienförmigen Lichtsignals ausgebildet sind, wobei die Bildaufnahmeeinheit ein Bildmuster des Lichtsignals auf dem Reifenprofil erfasst und daraus ein Bestimmen eines Reifenprofiltiefe-Messwerts als zum Reifendrucksignal zusätzlichen Reifenparameter durch die Auswertemittel ermöglicht.

9. Vorrichtung nach Anspruch 7 oder 8,
**dadurch gekennzeichnet, dass**
die optischen Aufnahmemittel zum Erzeugen von mindestens drei, bevorzugt mindestens fünf aufeinanderfolgenden Bildern während des Überfahrens
und/oder zum Erzeugen von Bildern mit einer Bildwiederholfrequenz >1 kHz, bevorzugt>3kHz, ausgebildet sind.

10. Vorrichtung nach einem der Ansprüche 1 bis 9,
**dadurch gekennzeichnet, dass**
den Auswertemitteln optische Anzeigemittel (42) zum Visualisieren des Reifendruckmesssignals und/oder eines weiteren Reifenparameterwerts zugeordnet sind.

11. Vorrichtung nach Anspruch 10,
dadurch kennzeichnet, dass
die Anzeigemittel Symbol- und/oder Schwellwertmittel zum Ausgeben eines Mittels eines, von mindestens einem vorbestimmten Schwellwert abhängigen digitalen, Farbwert- oder Symbolsignals aufweisen.

12. Vorrichtung nach einem der Ansprüche 1 bis 11,
**dadurch gekennzeichnet, dass**
die Messmittel quer zu der Richtung des Überfahrens so ausgebildet sind, dass an mehreren Reifen einer Achse des Fahrzeugs gleichzeitig die Reifendruckmessung erfolgen kann.

13. Verfahren zum Messen des Reifendrucks eines an einem in Bewegung befindlichen Fahrzeug vorgesehenen Reifens, insbesondere Verfahren zum Betreiben der Vorrichtung nach einem der Ansprüche 1 bis 12, mit den Schritten:
- Ermitteln einer Latschlänge eines sich auf einem Boden bildenden Latsches des Reifens durch Druckmessung und/oder optische Bildaufnahme
- Ermitteln einer Latschbreite des Latsches durch optische Bildaufnahme mittels auf das Relfenprofil gerichteter Bildaufnahmemittel und
- Bestimmen des Reifendrucks aus einer aus der Latschlänge und der Latschbreite ermittelten Latschfläche sowie einer darauf wirkenden Reifen- und/oder Druckkraft.

14. Verwendung der Vorrichtung nach einem der Ansprüche 1 bis 12 zur LKW-Reifendruckmessung im fließenden Verkehr.

## Claims

1. A device for tyre-pressure measurement of a tyre provided on a vehicle that is moving, having
measuring means (14, 18, 24) provided on or in a floor for interaction with the tyre, which measuring means generate an electronically analysable measurement signal as a reaction to being driven over with the tyre
and analysis means (22, 40), which output a tyre-pressure signal corresponding to the tyre pressure as a reaction to the measurement signal,
wherein
the measuring means have recording means (18) for registering a tyre width as tyre-contact width of a tyre contact area of the tyre formed when driving on the floor,
the analysis means are constructed for determining a tyre-contact length of the tyre contact area from a sequence of tyre width data generated by the recording means and/or from a curve of a pressure measurement signal generated by the measuring means,
and also are constructed for determining the tyre pressure from a tyre-contact area determined by means of the tyre-contact length and tyre-contact width, and a force acting on the tyre-contact area through the tyres,
**characterised in that** the recording means have optical recording means.

2. The device according to Claim 1,
**characterised in that**
the measuring means have temperature sensor means (24) acting on the tyres contactlessly, which are constructed for generating a tyre-temperature signal,
and the analysis means are constructed for processing the tyre-temperature signal when generating the tyre-pressure signal dependent on the tyre temperature.

3. The device according to Claim 2,
**characterised in that**
the temperature sensor means (24) have an infrared-based temperature sensor directed onto a tyre-sidewall of the tyre.

4. The device according to one of Claims 1 to 3,
**characterised in that**
the measuring means have a force sensor device (14), which has a plurality of force sensors (12) that are mechanically coupled to one another and constructed for being driven over by the vehicle.

5. The device according to Claim 4,
**characterised in that**
the plurality of force sensors arranged in a direction transversely and/or parallel to the direction of the driving is connected by means of a common pressure plate set up for contacting with the tyres.

6. The device according to one of Claims 1 to 5,
**characterised in that**
the force sensor device for generating a sequence of the pressure measurement signal with a frequency in the range between 10 and 500 Hz.

7. The device according to one of Claims 1 to 6,
**characterised in that**
the optical recording means have an image recording unit, which is directed onto the tyre profile and is constructed for generating at least one electronically analysable image for the tyres, which has tyre-width information.

8. The device according to Claim 7,
**characterised in that**
the optical recording means are constructed for generating at least one linear light signal directed onto the tyre profile,
wherein the image recording unit captures an image pattern of the light signal on the tyre profile and enables the determination therefrom of a tyre-profile-depth measured value as an additional tyre parameter to the tyre-pressure signal by means of the analysis means.

9. The device according to Claim 7 or 8,
**characterised in that**
the optical recording means are constructed for generating at least three, preferably five, sequential images during the driving over
and/or for generating images with an image-repetition frequency > 1 kHz, preferably > 3 kHz.

10. The device according to one of Claims 1 to 9,
**characterised in that**
optical display means (42) for visualising the tyre-pressure measured signal and/or a further tyre parameter value are assigned to the analysis means.

11. The device according to Claim 10,
**characterised in that**
the display means have symbol and/or threshold-value means for outputting an average of a digital, colour-value or symbol signal, which is dependent on at least one predetermined threshold value.

12. The device according to one of Claims 1 to 11,
**characterised in that**
the measuring means are constructed in such a manner transversely to the direction of the driving that the tyre-pressure measurement can take place at a plurality of tyres of an axle of the vehicle simultaneously.

13. A method for measuring the tyre pressure of a tyre provided on a vehicle that is moving, particularly a method for operating the device according to one of Claims 1 to 12, with the steps:
- determining a tyre-contact length of a tyre contact area of the tyre, which is formed on a floor, by pressure measurement and/or optical image recording
- determining a tyre-contact width of the tyre-contact area by optical image recording by means of image recording means directed onto the tyre profile, and
- determining the tyre pressure from a tyre-contact area determined from the tyre-contact length and the tyre-contact width and also a tyre and/or pressure force acting thereon.

14. A use of the device according to one of Claims 1 to 12 for HGV tyre-pressure measurement in flowing traffic.

## Revendications

1. Dispositif de mesure de la pression d'un pneu monté sur un véhicule qui se trouve en mouvement, comprenant
des moyens de mesure (14, 18, 24) conçus sur un ou dans un sol pour interagir avec le pneu, lesquels génèrent un signal de mesure pouvant être interprété électroniquement en réaction au roulage du pneu,
et des moyens d'interprétation (22, 40) qui délivrent un signal de pression de pneu correspondant à la pression du pneu en réaction au signal de mesure,
les moyens de mesure possédant des moyens d'enregistrement (18) destinés à détecter une largeur de pneu en tant que largeur d'aplatissement d'un aplatissement du pneu qui se forme lors du roulage sur le sol,
les moyens d'interprétation étant conçus pour déterminer une longueur d'aplatissement de l'aplatissement à partir d'une séquence de données de largeur de pneu générées par les moyens d'enregistrement et/ou à partir d'un tracé d'un signal de mesure de pression généré par les moyens de mesure, ainsi que pour déterminer la pression du pneu à partir d'une surface d'aplatissement définie par la longueur d'aplatissement et la largeur d'aplatissement et d'une force exercée par le pneu sur la surface d'aplatissement,
**caractérisé en ce que** les moyens d'enregistrement possèdent des moyens d'enregistrement optiques.

2. Dispositif selon la revendication 1, **caractérisé en ce que** les moyens de mesure possèdent des moyens de détection de la température (24) qui agissent sans contact sur le pneu, lesquels sont configurés pour générer un signal de température de pneu, et les moyens d'interprétation sont configurés pour traiter le signal de température de pneu lors de la génération du signal de pression de pneu dépendant de la température du pneu.

3. Dispositif selon la revendication 2, **caractérisé en ce que** les moyens de détection de la température (24) possèdent une sonde de température fonctionnant aux infrarouges dirigée sur un flanc du pneu.

4. Dispositif selon l'une des revendications 1 à 3, **caractérisé en ce que** les moyens de mesure possèdent un dispositif de détection de force (14), lequel possède une pluralité de capteurs de force (12) accouplés mécaniquement les uns aux autres et configurés pour un roulage du véhicule sur ceux-ci.

5. Dispositif selon la revendication 4, **caractérisé en ce que** la pluralité de capteurs de force, disposés dans une direction transversale et/ou parallèle au roulage, sont reliés au moyen d'une plaque de compression commune conçue pour entrer en contact avec le pneu.

6. Dispositif selon l'une des revendications 1 à 5, **caractérisé en ce que** le dispositif de détection de force est configuré pour générer une séquence du signal de mesure de pression avec une fréquence dans la plage entre 10 et 500 Hz.

7. Dispositif selon l'une des revendications 1 à 6, **caractérisé en ce que** les moyens d'enregistrement optiques possèdent une" unité d'enregistrement d'image qui est dirigée sur le profil du pneu et qui est configurée pour générer au moins une image du pneu, laquelle peut être interprétée électroniquement et présente une information de largeur de pneu.

8. Dispositif selon la revendication 7, **caractérisé en ce que** les moyens d'enregistrement optiques sont configurés pour générer au moins un signal lumineux de forme rectiligne dirigé sur le profil du pneu, l'unité d'enregistrement d'image détectant un motif imagé du signal lumineux sur le profil du pneu et permettant, à partir de celui-ci, une détermination d'une valeur mesurée de la profondeur du profil du pneu par les moyens d'interprétation en tant que paramètre de référence complémentaires au signal de pression de pneu.

9. Dispositif selon la revendication 7 ou 8, **caractérisé en ce que** les moyens d'enregistrement optiques sont configurés pour générer au moins trois, de préférence au moins cinq images successives pendant le roulage et/ou pour générer des images avec une fréquence de répétition d'image > 1 kHz, de préférence > 3 kHz.

10. Dispositif selon l'une des revendications 1 à 9, **caractérisé en ce que** des moyens d'affichage visuel (42) destinés à visualiser le signal de mesure de pression de pneu et/ou une valeur de paramètre de pneu supplémentaire sont associés aux moyens d'interprétation.

11. Dispositif selon la revendication 10, **caractérisé en ce que** les moyens d'affichage possèdent des moyens à symbole et/ou à valeur de seuil pour délivrer une moyenne d'un signal numérique de valeur chromatique ou de symbole dépendant au moins d'une valeur de seuil prédéfinie.

12. Dispositif selon l'une des revendications 1 à 11, **caractérisé en ce que** les moyens de mesure sont configurés, dans le sens transversal par rapport au sens du roulage, de telle sorte que la mesure de la pression de pneu peut être effectuée simultanément sur plusieurs pneus d'un essieu du véhicule.

13. Procédé de mesure de la pression d'un pneu monté sur un véhicule qui se trouve en mouvement, notamment procédé pour faire fonctionner le dispositif selon l'une des revendications 1 à 12, comprenant les étapes suivantes :
- détermination d'une longueur d'aplatissement d'un aplatissement du pneu qui se forme sur un sol par mesure de la pression et/ou enregistrement d'image optique
- détermination d'une largeur d'aplatissement de l'aplatissement par enregistrement d'image optique à l'aide de moyens d'enregistrement d'image dirigés sur le profil du pneu et
- détermination de la pression du pneu à partir d'une surface d'aplatissement définie à partir de la longueur d'aplatissement et de la largeur d'aplatissement ainsi que d'une force de pneu et/ou de pression exercée sur celle-ci.

14. Utilisation du dispositif selon l'une des revendications 1 à 12 pour la mesure de la pression des pneus d'un poids-lourds pendant le trafic fluide.
